# EUROPEAN PATENT APPLICATION

(11) **EP 3 125 100 A1**
(43) Date of publication of application: **01.02.2017**
(21) Application number: 16180797.9
(22) Date of filing: 22.07.2016
(51) Int. Cl.: G06F 3/0488, G06F 3/14, G06Q 10/10, H04L 29/06

(54) **IMAGE PROCESSING APPARATUS, IMAGE PROCESSING SYSTEM AND IMAGE PROCESSING METHOD**

(30) Priority: 29.07.2015 JP 2015149572; 13.06.2016 JP 2016116911
(71) Applicant: Ricoh Company, Ltd., Tokyo 143-8555 (JP)
(72) Inventor: MIHARA, Akihiro, Tokyo, 143-8555 (JP)
(74) Representative: Schwabe - Sandmair - Marx

(57) **Abstract**

An image processing apparatus (40) connectable with a plurality of electronic information terminals (20) via a communication network includes a processor (501, 515) to acquire one or more image data, to generate an image with a format based on the acquired one or more image data, to transmit the generated image to each one of the plurality of the electronic information terminals (20) to display the generated image at each one of the plurality of the electronic information terminals (20), to receive an operation event performed to the image displayed at each one of the electronic information terminals (20) from each one of the electronic information terminals (20), and to identify one of the electronic information terminals (20) that has performed the operation event based on identification (ID) information assigned to the operation event.

## Description

### BACKGROUND

### Technical Field

This disclosure relates to an image processing apparatus, an image processing system, an image processing method.

### Background Art

Recently, electronic information boards known as interactive white board (IWB) are used as image processing apparatuses. The interactive white board (IWB) is configured with, for example, a flat panel display such as a liquid crystal panel, a pointing device such as an input pen and finger used for inputting an operation on a display face of the display, a touch panel that is a coordinate detector to detect coordinates of a point contacted by the pointing device, and a control unit to display various images of characters, numbers and figures written on the display face of the display based on coordinates data output from the coordinate detector. The interactive white board (IWB) can display contents data such as image data with an enlarged size and can display images written on the display by using the pointing device.

Further, the interactive white board (IWB) can be connected to an electronic information terminal such as a tablet computer via a wireless local area network (LAN). In this configuration, an image displayed on the display of the interactive white board (IWB) can be displayed on a display of the electronic information terminal, and an operation such as stroke writing operation and stroke erasing operation to the image can be performed on the electronic information terminal. For example, an operation event performed on the electronic information terminal is transmitted to the interactive white board (IWB), and the interactive white board (IWB) processes the operation event to display a stroke on the display.

Further, an information system that the interactive white board (IWB) is connected to a plurality of electronic information terminals can be devised. In this information system, an image can be transmitted from the interactive white board (IWB) to the electronic information terminals, an operation such as a stroke drawing performed on each of the electronic information terminals can be transmitted to the interactive white board (IWB), and the interactive white board (IWB) can display the stroke drawing at each of the electronic information terminals as an operation event on the display of the interactive white board (IWB) based on the operation performed on each of the electronic information terminals.

JP-2014-200076-A discloses an image transmission system having a server and electronic information terminals. When an image is transmitted from the server to the electronic information terminals, the server performs the rendering of a plurality of images as contents of hyper text markup language (HTML) 5, and the rendering result is transmitted to the electronic information terminal as compressed data.

The display of the interactive white board (IWB) displays a screen image configured with a plurality of pages to which a stroke drawing can be performed from each of the electronic information terminals, in which the stroke can be drawn from each of the electronic information terminals while switching the pages. However, if the pages are switched at the interactive white board (IWB) when the stroke is being drawn, the stroke to be drawn on one page may be drawn another page, which is not intended by a user that is drawing the stroke.

### SUMMARY

As one aspect of the present invention, an image processing apparatus connectable with a plurality of electronic information terminals via a communication network is devised. The image processing apparatus includes a processor to acquire one or more image data, to generate an image with a format based on the acquired one or more image data, to transmit the generated image to each one of the plurality of the electronic information terminals to display the generated image at each one of the plurality of the electronic information terminals, to receive an operation event performed to the image displayed at each one of the electronic information terminals from each one of the electronic information terminals, and to identify one of the electronic information terminals that has performed the operation event based on identification (ID) information assigned to the operation event.

As another aspect of the present invention, a method of processing image in an image processing system having an image processing apparatus connectable with a plurality of electronic information terminals via a communication network is devised. The method includes acquiring one or more image data, generating an image with a format based on the acquired one or more image data, transmitting the generated image to each one of the plurality of the electronic information terminals to display the generated image at each one of the plurality of the electronic information terminals, receiving an operation event performed to the image displayed at each one of the electronic information terminals from each one of the electronic information terminals, and identifying one of the electronic information terminals that has performed the operation event based on identification (ID) information assigned to the operation event.

As to the above described aspects of the present invention, the operation event performed at the each one of the electronic information terminals and transmitted to the image processing apparatus can be processed effectively at the image processing apparatus. Specifically, the first process can be executed without the effect of the second process, and thereby the desired process result can be attained. For example, the first process for processing the operation event performed at the each one of the electronic information terminals such as stroke drawing can be executed correctly by deactivating the second process such as switching of pages of the information board image when the first process is being executed.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a block diagram of a configuration of an interactive electronic information board (IEIB) system of a first example embodiment;
FIG. 2 is a block diagram of a hardware configuration of the interactive electronic information board (IEIB) of FIG. 1;
FIG. 3A is a functional block diagram of the interactive electronic information board (IEIB) of FIG. 1;
FIG. 3B is an execution unit including a counter;
FIG. 3C is an execution unit including a timer;
FIG. 4 is a functional block diagram of an electronic information terminal used for the interactive electronic information board (IEIB) system;
FIG. 5 is a sequential chart of a process of preparing an image transmission in the interactive electronic information board (IEIB) system;
FIG. 6 is a sequential chart of a transmission sequence of compressed data in the interactive electronic information board (IEIB) system;
FIG. 7 is a sequential chart of inputting an operation event in the interactive electronic information board (IEIB) system;
FIG. 8 is a flowchart showing the steps of a process when a page switching is instructed.
FIG. 9 is a sequential chart of a process including ON-OFF control of a page switching operation when a stroke is being drawn in the interactive electronic information board (IEIB) system described as a first case;
FIG. 10 is another sequential chart of a process including ON-OFF control of the page switching operation when a stroke is being drawn in the interactive electronic information board (IEIB) system described as a variant of a first case;
FIG. 11 is another sequential chart of a process including ON-OFF control of the page switching operation when the stroke is being drawn described as a second case;
FIG. 12 is another sequential chart of process including ON-OFF control of the page switching operation when the stroke is being drawn in the interactive electronic information board (IEIB) system described as a third case; and
FIGs. 13A and 13B illustrate schematic views of image processing when a page switching occurs in conventional arts.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

### DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, one or more apparatuses or systems according to one or more example embodiments are described hereinafter.

A description is given of an image processing apparatus, an image processing system and an image processing method of one or more example embodiments of the present invention. An interactive electronic information board (IEIB), which is an example of the image processing apparatus, includes, for example, a display such as a flat panel display (e.g., liquid crystal panel), a touch panel that is a coordinate detector to detect coordinates of a point contacted by a pointing device such as an input pen and finger used for inputting used for inputting an operation on a display face of the display, and a control unit to display various images of characters, numbers and figures written on the display face of the display based on coordinates data output from the coordinate detector. The interactive electronic information board (IEIB) can display contents data such as image data with an enlarged size and can display images written on the display by using the pointing device. The interactive electronic information board (IEIB) can transmit various images written on the display face of the display to one or more electronic information terminals.

### (Interactive electronic information board system)

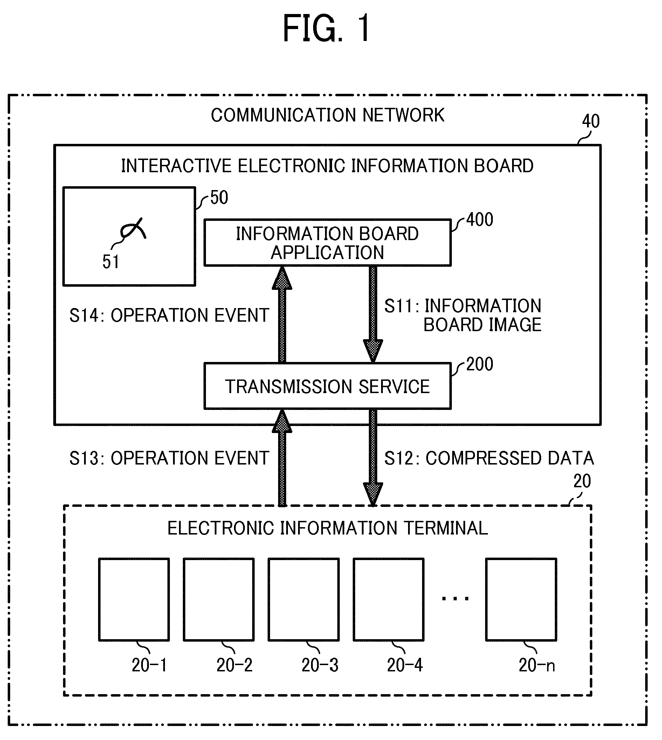

A description is given of an interactive electronic information board (IEIB) system, which is an example of the image processing system, with reference to FIG. 1. FIG. 1 is a block diagram of a configuration of the interactive electronic information board (IEIB) system of a first example embodiment. The interactive electronic information board (IEIB) system includes, for example, an interactive electronic information board (IEIB) 40 useable as the image processing apparatus, a plurality of electronic information terminals 20 (20-1, 20-2, ..., 20-n) connectable to the interactive electronic information board (IEIB) 40 via a communication network such as a wireless local area network (LAN). The wireless LAN is for example an intra-network. Further, the communication network is not limited to the wireless LAN. For example, the interactive electronic information board (IEIB) 40 and each of the electronic information terminals 20 can be connected by any communication networks such as wired/wireless LAN, wired/wireless Internet or the like.

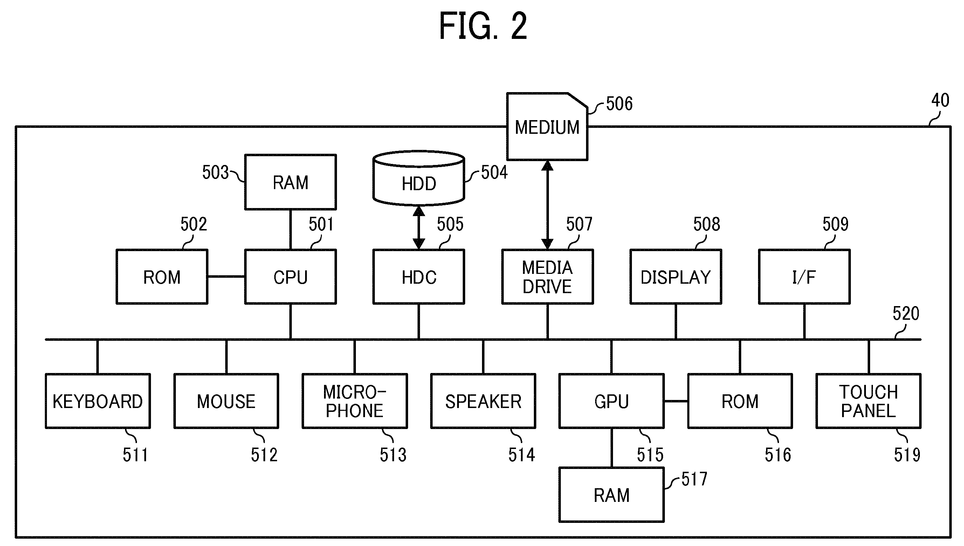

FIG. 2 is a block diagram of a hardware configuration of the interactive electronic information board (IEIB) 40. The interactive electronic information board (IEIB) 40 includes, for example, a central processing unit (CPU) 501, a read only memory (ROM) 502, a random access memory (RAM) 503, a hard disk drive (HDD) 504, a hard disk controller (HDC) 505, a media drive 507, a display 508 used as an image display device, an interface (I/F) 509, a keyboard 511, a mouse 512, a microphone 513, a speaker 514, and a graphics processing unit (GPU) 515, which are connectable one to another by a bus line 520.

The CPU 501 controls the interactive electronic information board (IEIB) 40 as a whole. The ROM 502 stores programs such as initial program loader (IPL) to activate the CPU 501. The RAM 503 is used as a working area of the CPU 501. The HDD 504 stores various data such as programs. The HDC 505 controls data reading and data writing of various data to the HDD504 under the control of the CPU 501. The media drive 507 controls data reading and data writing to the storage medium 506 such as a flash memory. The display 508 displays various information. The I/F509 is used to communicate data via the communication network, and can be used for a dongle connection. The GPU 515 is connectable to a ROM 516, and a RAM517, in which the ROM 516 stores programs to activate the GPU 515, and the RAM 517 is used as a working area of the GPU 515. The bus line 520 includes, for example, an address bus to electrically connect the each of the above units and data bus.

Further, the interactive electronic information board (IEIB) 40 includes, for example, a touch panel 519. The touch panel 519 can be used to detect coordinates of a point of an input device and a finger (hereinafter, pointing device) contacting on the display 508. Further, the display 508 of the interactive electronic information board (IEIB) 40 may be a liquid crystal display having a sufficient screen size. As to the interactive electronic information board (IEIB) 40, when the CPU 501 executes one or more software programs, an information board application 400 and a transmission service 200 illustrated in FIG. 1 can be implemented.

The electronic information terminal 20 illustrated in FIG. 1 may be a personal computer (PC) such as notebook PC and tablet PC, which can be operated under various Operation Systems (OSs) such as iOS, Android (registered trademark), Windows (registered trademark), and macOS (registered trademark).

A description is given of an overall operation of the interactive electronic information board (IEIB) system with reference to FIG. 2. As to the interactive electronic information board (IEIB) 40, the information board application 400 detects an operation event such as a stroke operation (e.g., stroke writing, stroke erasing) and a page operation performed by the pointing device (e.g., input device, finger) on a display 50 by using the touch panel 519. Further, as to the information board application 400, a stroke 51 can be drawn on the display 50 based on the operation event detected by the touch panel 519. Further, the information board application 400 transmits an image on the display 50 (e.g., image on the information board) to the transmission service 200 (step S11). The transmission service 200 converts a plurality of images such as image data transmitted from the information board application 400 to compressed data, and transmits the compressed data to each of the electronic information terminals 20 (step S12). In this example case, one interactive electronic information board (IEIB) 40 transmits the compressed data to the plurality of electronic information terminals 20-1, 20-2, ..., 20-n ("n" is the number of terminals) concurrently.

Further, after receiving the information board image transmitted from the interactive electronic information board (IEIB) 40, the electronic information terminal 20 displays the information board image on the display of the electronic information terminal 20, and then an operator such as a user can perform a touching operation and a mouse operation to the image displayed on the display of the electronic information terminal 20. An operation event that is generated by the touching operation and the mouse operation is transmitted to the transmission service 200 of the interactive electronic information board (IEIB) 40 (step S 13).

After receiving the operation event, the transmission service 200 transmits the operation event to the information board application 400 (step S14). After receiving the operation event, the information board application 400 performs a process corresponding to the operation event such as a process of drawing the stroke 51 on the display 50. The operation event input to the information board application 400 is assigned with coordinate information. Therefore, the information board application 400 can generate a stroke corresponding to the operation event based on the coordinate information, and can draw the stroke on an image displayed on the display 50, which means the information board application 400 can perform a drawing operation on the image already displayed on the display 50. With employing this configuration, the electronic information terminal 20 at a remote location can draw an image such as a stroke image on the display 50 of the interactive electronic information board (IEIB) 40, which is known as a remote operation.

Further, the result obtained by processing the operation event is re-transmitted to the electronic information terminal 20 as an image. Therefore, a user of the electronic information terminal 20 can perform an interactive operation with the interactive electronic information board (IEIB) 40. Further, the transmission service 200 can assign a terminal identification (ID) used for identifying the electronic information terminal 20 to the operation event, and transmits the operation event assigned with the terminal ID to the information board application 400. Therefore, the information board application 400 can identify which one of the electronic information terminals 20 transmits the operation event to the interactive electronic information board (IEIB) 40. Therefore, even if the plurality of electronic information terminals 20 perform the operation events, each of the operation events can be correctly processed at the interactive electronic information board (IEIB) 40 without confusing the operation events.

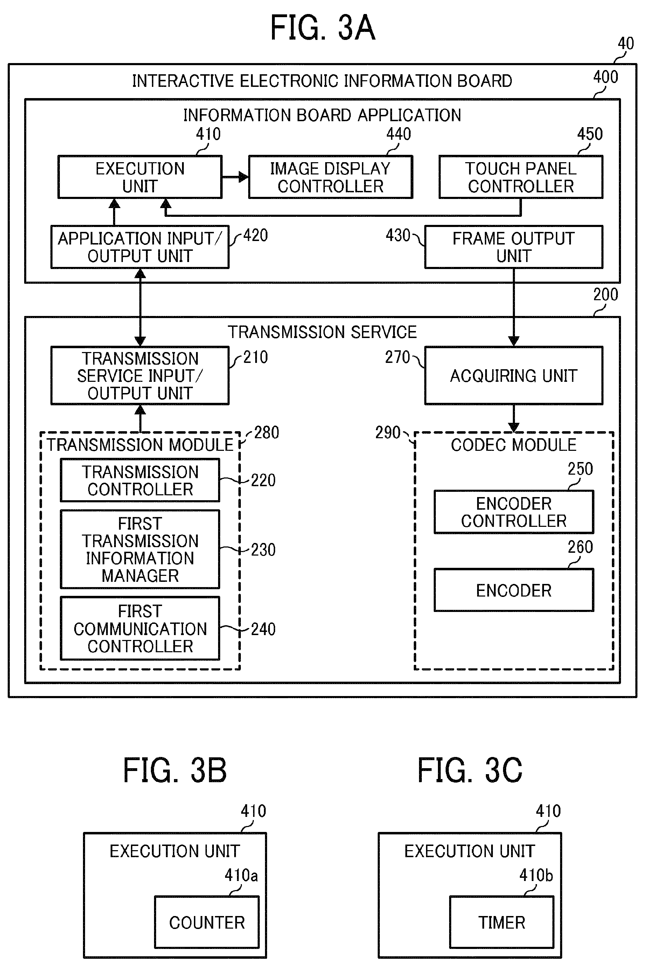

A description is given of a configuration of the interactive electronic information board (IEIB) 40 with reference to FIG. 3A. FIG. 3A is a functional block diagram of the interactive electronic information board (IEIB) 40. As above described, the interactive electronic information board (IEIB) 40 includes the information board application 400 and the transmission service 200. The information board application 400 and the transmission service 200 cooperate with each other to devise an information board capability of the interactive electronic information board (IEIB) 40 to be used by a user. The information board application 400 implements the capability of the interactive electronic information board (IEIB) 40, and generates an image to be transmitted to the electronic information terminal 20. As illustrated in FIG. 3A, the information board application 400 includes, for example, an execution unit 410, an application input/output unit 420, a frame output unit 430, an image display controller 440, and a touch panel controller 450.

The execution unit 410 is a module to implement the capabilities of the interactive electronic information board (IEIB) 40. Specifically, the execution unit 410 displays the information board image on the display 50 (FIG. 2) or draws a stroke based on a drawing command. The application input/output unit 420 receives data such as an operation event output from a transmission service input/output unit 210. Further, the application input/output unit 420 converts the received data to data having a format processable by the execution unit 410, and transmits the converted data to the execution unit 410, in which the application input/output unit 420 can be used as an event processing unit. Further, the application input/output unit 420 transmits data of service start and service stop to the transmission service input/output unit 210. The transmission service input/output unit 210 can be used as a transmission unit

The frame output unit 430 outputs an image to be transmitted to the electronic information terminal 20, in which the frame output unit 430 can be used as an image generator that generates and outputs the image. For example, the frame output unit 430 outputs compressed data formatted with H.264/AVC, which is generated from an image of RGB bitmap. The image display controller 440 controls an image display on the display 50 based on a drawing signal received from the execution unit 410. The touch panel controller 450 outputs a detection signal, received from the touch panel 519, to the execution unit 410.

The transmission service 200 is a module used for an image transmission at the interactive electronic information board (IEIB) 40 in the interactive electronic information board (IEIB) system. As illustrated in FIG. 3A, the transmission service 200 includes, for example, a transmission service input/output unit 210, a transmission controller 220, a first transmission information manager 230, a first communication controller 240, an encoder controller 250, an encoder 260, and an acquiring unit 270. The transmission controller 220, the first transmission information manager 230 and the first communication controller 240 can configure a transmission module 280, and the encoder controller 250 and the encoder 260 can configure a codec module 290.

The transmission service input/output unit 210 receives data such as data of service start and service stop output by the application input/output unit 420. Further, the transmission service input/output unit 210 transmits data such as an operation event to the application input/output unit 420. The first transmission information manager 230 manages encoding setting for transmission, and information of the electronic information terminal 20 being connected. The first communication controller 240 can be used as a communication unit. The transmission controller 220 controls the transmission as a whole, and instructs the activation and deactivation of the codec module 290. The encoder controller 250 acquires frame images with a frame rate designated by the transmission controller 220, and transmits the acquired frame images to the encoder 260. The encoder 260 generates compressed data from the acquired image. The acquiring unit 270 can be used as an image acquiring unit, in which the acquiring unit 270 acquires the frame images output by the frame output unit 430 of the information board application 400.

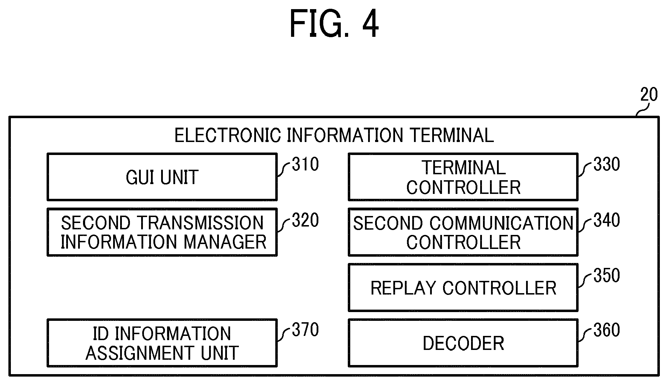

A description is given of the electronic information terminal 20. The electronic information terminal 20 has a hardware configuration similar to the hardware configuration of the interactive electronic information board (IEIB) 40 illustrated in FIG. 2, and thereby the hardware configuration of the electronic information terminal 20 is not described. FIG. 4 is a functional block diagram of the electronic information terminal 20 used for the interactive electronic information board (IEIB) system. As illustrated in FIG. 4, the electronic information terminal 20 includes, for example, a graphical user interface (GUI) unit 310, a second transmission information manager 320, a terminal controller 330, a second communication controller 340, a replay controller 350, and a decoder 360.

The GUI unit 310 displays one or more user interfaces (UI). The terminal controller 330 controls the electronic information terminal 20 as a whole such as a start of communication and a disconnection of communication. The second transmission information manager 320 retains transmission-related information such as encoding setting.

The second communication controller 340 controls communication with the interactive electronic information board (IEIB) 40, and communicates data with the transmission service 200 of the interactive electronic information board (IEIB) 40. The replay controller 350 inputs the compressed data to the decoder 360. The decoder 360 decodes the compressed data and displays the decoded data.

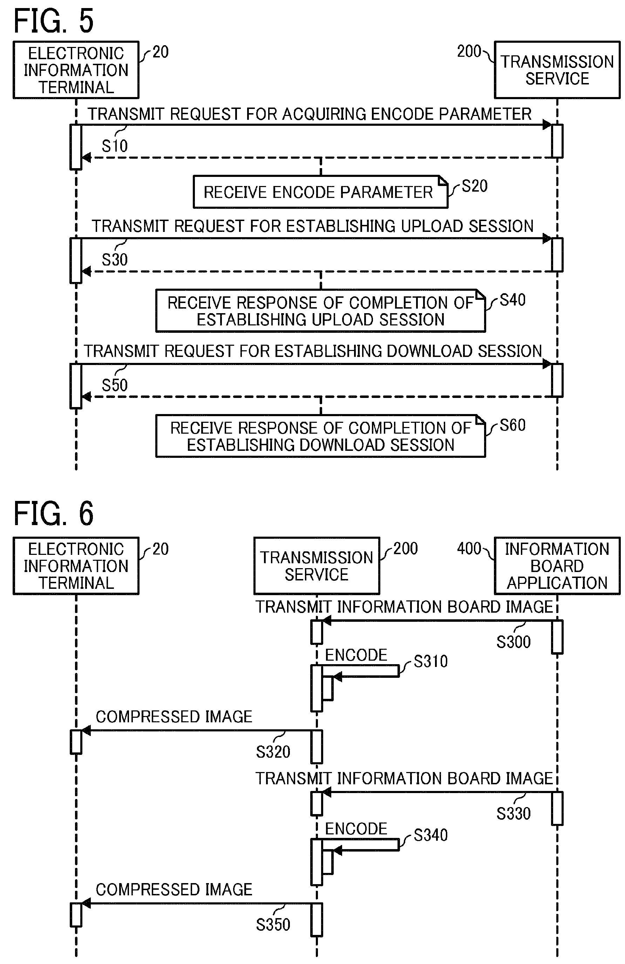

A description is given of an operation in the interactive electronic information board (IEIB) system. The operation includes, for example, a preparation of image reception, a transmission of compressed data, and an input of operation event to be performed sequentially. FIG. 5 is a sequential chart of a process of preparing the image transmission in the interactive electronic information board (IEIB) system. FIG. 5 illustrates a process flow when the electronic information terminal 20 is connected to the transmission service 200 of the interactive electronic information board (IEIB) 40, and the electronic information terminal 20 is set ready to receive an image.

At first, the second communication controller 340 of the electronic information terminal 20 transmits a request for acquiring an encode parameter to the first communication controller 240 of the transmission service 200 (step S10). After receiving the request for acquiring the encode parameter, the first communication controller 240 of the transmission service 200 acquires an encode parameter from the first transmission information manager 230, and transmits the encode parameter to the electronic information terminal 20 as a response (step S20). Then, the second communication controller 340 of the electronic information terminal 20 transmits a request for establishing an Upload session to the first communication controller 240 of the transmission service 200 (step S30). Further, after receiving the request for establishing the Upload session, the first communication controller 240 of the transmission service 200 transmits a response of completion of establishing the Upload session (step S40) to the electronic information terminal 20. The Upload session is a network connection for transmitting the operation event from the electronic information terminal 20 to the transmission service 200, in which the network connection is being maintained.

Then, the second communication controller 340 of the electronic information terminal 20 transmits a request for establishing an Download session to the first communication controller 240 of the transmission service 200 (step S50). After receiving the request for establishing the Download session, the first communication controller 240 of the transmission service 200 transmits a response of completion of establishing the Download session (step S60) to the electronic information terminal 20. The Download session is a network connection for transmitting an image from the transmission service 200 to the electronic information terminal 20, in which the network connection is being maintained. When the Download session is established, the preparation of image reception of the electronic information terminal 20 has completed. Further, although the Download session and the Upload session can be separately performed as above described, the Download session and the Upload session can be performed concurrently.

A description is given of a transmission sequence of compressed data from the interactive electronic information board (IEIB) 40 to the electronic information terminal 20. FIG. 6 is a sequential chart of a transmission sequence of compressed data in the interactive electronic information board (IEIB) system. The frame output unit 430 of the information board application 400 transmits an information board image to the acquiring unit 270 of the transmission service 200 (step S300), in which the information board image is transmitted as an image. The information board image can be transmitted as a follows. For example, the frame output unit 430 can transmit an image to the acquiring unit 270 directly. Further, an image storage buffer used by the frame output unit 430 and the acquiring unit 270 can be disposed, in which the frame output unit 430 inputs an image to the image storage buffer and the acquiring unit 270 acquires the image from the image storage buffer.

Then, the encoder 260 encodes the image acquired by the acquiring unit 270 of the transmission service 200 to compressed frame data (step S310). When the encoder 260 completes the encoding, the encoder 260 transfers the compressed frame data to the first communication controller 240, and the first communication controller 240 transmits the compressed data to the electronic information terminal 20 (step S320). In step S320, the first communication controller 240 transmits the compressed data to one or more of the electronic information terminals 20 being connected to the communication network "N". Therefore, the electronic information terminals 20 being connected to the communication network "N" can share or use the same information board image.

The above described steps S300, S310 and S320 indicate a sequence of transmitting one frame of image. By repeating this sequence as indicated by steps S300, S310, S320 and step S330, S340, S350, the compressed data generated from the information board image can be transmitted sequentially to the electronic information terminals 20. In this sequence, the information board image transmitted from the interactive electronic information board (IEIB) 40 to each of the electronic information terminals 20 is not a screen image displayed on the display 50 (see FIG. 1) of the information board application 400, but a canvas image drawn with a stroke is transmitted. The canvas image does not include a UI used for the information board operation such as pen mode change button and eraser button. This setting can be changed as required. In this case, any images output by the information board application 400 can be transmitted without transmitting an UI image, in which an image not required for a user of the electronic information terminal 20 is not displayed.

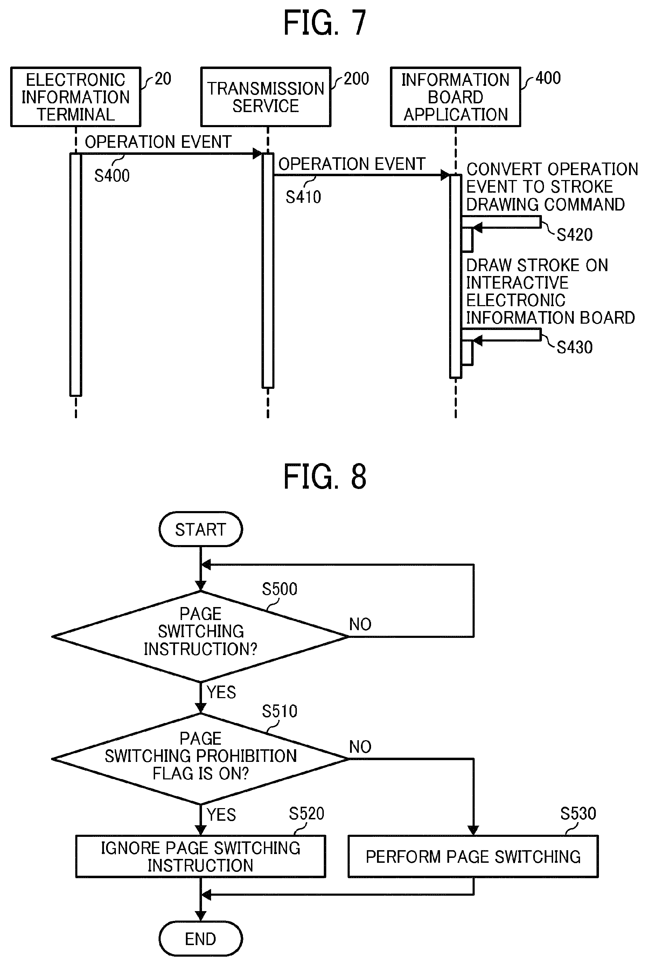

A description is given of a sequence of inputting an operation event by using the electronic information terminal 20. FIG. 7 is a sequential chart of inputting an operation event in the interactive electronic information board (IEIB) system. FIG. 7 illustrates a case that a user of the electronic information terminal 20 performs a mouse operation to an information board image being displayed on the display of the electronic information terminal 20.

At first, the electronic information terminal 20 transmits operation event information including the operation event type and generated coordinates of the operation event to the first communication controller 240 of the transmission service 200 (step S400). The first communication controller 240 transmits the received operation event information to the transmission service input/output unit 210, and the transmission service input/output unit 210 assigns the terminal ID (e.g., 1, 2, ..., n) used for identifying the electronic information terminal 20 to the operation event information, and then the transmission service input/output unit 210 transmits the operation event information assigned with the terminal ID to the application input/output unit 420 (step S410).

After receiving the operation event information, the application input/output unit 420 converts the operation event to a functional execution command having a format that can be executed by the execution unit 410 such as a stroke drawing command, and transmits the functional execution command to the execution unit 410 (step S420). The application input/output unit 420 processes the operation event information assigned with the terminal ID to generate the functional execution command for each of the terminal IDs. Therefore, the application input/output unit 420 can be used as an information terminal identification unit used for identifying the electronic information terminal 20. The execution unit 410 executes the functional execution command transferred from the application input/output unit 420 (step S430). For example, when the execution unit 410 executes the stroke drawing command, which is one example of the functional execution command, a stroke can be drawn on the display 50 of the interactive electronic information board (IEIB) 40. With employing this configuration, the operation events performed at a plurality of electronic information terminals 20 (20-1 to 20-n) can be distinguished as the operation events at each one of electronic information terminals 20, and then executed by the information board application 400.

As above described, when the user of the electronic information terminal 20 performs an operation event such as the mouse operation (e.g., stroke drawing) to the information board image displayed on the display face of the display of the electronic information terminal 20, the stroke 51 is displayed on the display 50 of the interactive electronic information board (IEIB) 40 where the information board application 400 is implemented, and a resultant image displayed on the display 50 is displayed on the electronic information terminal 20. Further, since the operation event information is assigned with the terminal ID, the application input/output unit 420 can generate the stroke drawing command for each of the electronic information terminals 20 that is for each of the users of the electronic information terminals 20.

Therefore, even if a plurality of users transmit the operation events concurrently, each of the strokes can be distinguished, and the strokes corresponding to the intension of all users that input the operation events can be drawn without confusion. Further, since the information board image displayed with the strokes can be transmitted to one or more of the electronic information terminals 20, contents data such as image data displayed on the interactive electronic information board (IEIB) 40 can be shared by the plurality of users, and the plurality of users can perform the writing to the contents data such as image data. As to the interactive electronic information board (IEIB) 40, the operation events transmitted from the plurality of the electronic information terminals can be distinguished and processed effectively.

### (Variant example of interactive electronic information board (IEIB) system)

A description is given of a variant example of the first example embodiment of the interactive electronic information board (IEIB) system. As to the interactive electronic information board (IEIB) system of the variant example, the electronic information terminal 20 assigns the terminal ID (e.g., 1, 2, 3, ..., n), which is the identification (ID) information of the electronic information terminal 20, to the operation event. Therefore, the electronic information terminal 20 can further include an identification (ID) information assignment unit 370 as indicated in FIG. 4. The terminal ID assigned by the identification (ID) information assignment unit 370 is transmitted to the interactive electronic information board (IEIB) 40 with the operation event. By contrast, at the interactive electronic information board (IEIB) 40, the transmission service input/output unit 210 (see FIG. 3A) does not assign the terminal ID. Further, the application input/output unit 420 of the interactive electronic information board (IEIB) 40 determines which operation event is performed at which electronic information terminal 20 based on the terminal IDs transmitted from the electronic information terminals 20. Then, the subsequent processes can be performed similar to the interactive electronic information board (IEIB) 40 of the first example embodiment.

As to the variant example of the first example embodiment too, the operation events performed at the plurality of electronic information terminals 20 (20-1 to 20-n) can be distinguished as the operation events at each one of electronic information terminals 20, and then executed by the information board application 400. Therefore, the operation events performed at the plurality of electronic information terminals 20 can be distinguished and processed effectively.

As to the variant example of the first example embodiment too, when the user of the electronic information terminal 20 performs an operation such as a mouse operation to the information board image displayed on the electronic information terminal 20, the stroke 51 is displayed on the display 50 of the interactive electronic information board (IEIB) 40 where the information board application 400 is implemented, and a resultant image displayed on the display 50 is displayed on the electronic information terminal 20. Further, since the operation event information is assigned with the terminal ID, the application input/output unit 420 can generate the stroke drawing command for each of the electronic information terminals 20 that is for each of the users of the electronic information terminals 20. Therefore, even if a plurality of users transmit the operation events concurrently, each of the strokes can be distinguished, and the strokes corresponding to the intension of all users that inputs the operation events can be drawn without confusion.

Further, since the information board image displayed with the strokes can be transmitted to one or more of the electronic information terminals 20, the contents data such as image data displayed on the interactive electronic information board (IEIB) 40 can be shared by the plurality of users, and the plurality of users can perform the writing to the contents data such as image data.

### (First case)

A description is given of a first case when a page switching instruction occurs at the interactive electronic information board (IEIB) 40 when a stroke is being drawn. In the interactive electronic information board (IEIB) 40, it is assumed that the information board image, used as a base image, can be configured with a plurality of pages, and the writing operation (e.g., line drawing) can be performed while switching pages as required.

A page switching operation can be activated as follows. When the touch panel controller 450 of the interactive electronic information board (IEIB) 40 receives a detection signal related to the page switching instruction from the touch panel 519, a page switching command is generated and output to the execution unit 410. Further, the page switching operation can be executed based on a page switching instruction transmitted from any one of the electronic information terminals 20. In this case, when the application input/output unit 420 receives an operation event related to the page switching operation from the electronic information terminal 20, the application input/output unit 420 generates a page switching command having a format executable by the execution unit 410, and transmits the page switching command to the execution unit 410.

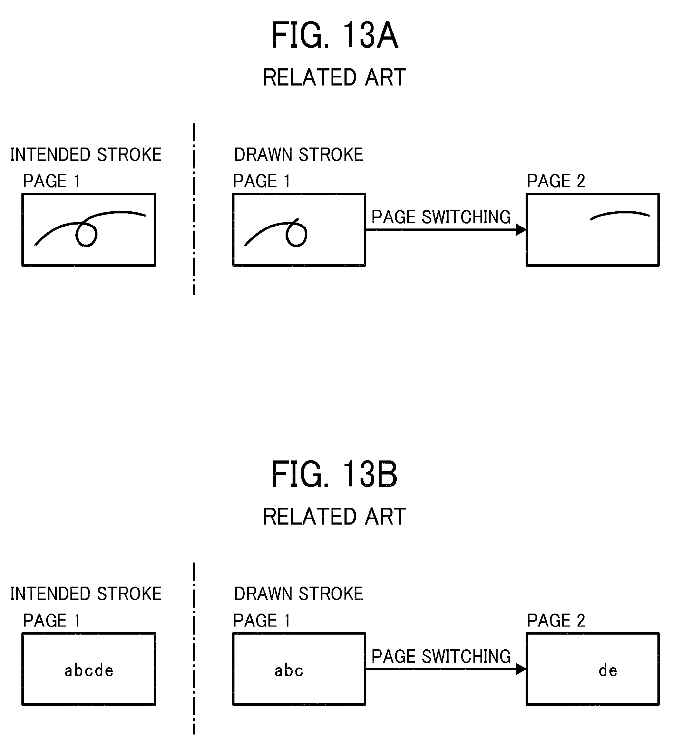

FIG. 13A and 13B illustrate schematic views of image processing when the page switching occurs in conventional arts. FIGs. 13A and 13B indicate cases comparing a stroke intended by a user and actual stroke drawn on an interactive white board. Hereinafter, it is assumed that when a user is writing a line image to page 1 of the information board image by using one of the electronic information terminals, the information board image is switched to page 2 by an operation at the interactive white board. In this case, a resultant image can become an image as indicated in FIG. 13A, in which a continuous one line image is divided and drawn on different pages, which is not matched to the user's intention. Further, a resultant image can become an image as indicated in FIG. 13B, in which a string of characters drawn continuously is divided and drawn on different pages, which is not matched to the user's intention. Therefore, in conventional interactive white boards, the stroke being drawn may be drawn on a page not matched to the user's intention.

Therefore, as to the first example embodiment, when one continuously-writing stroke is being drawn, the page operation such as the page switching is prohibited so that a stroke matched to the user's intention can be drawn. Specifically, the execution unit 410 (FIG. 3A) retains a page switching prohibition flag, which indicates whether the page switching is allowed or prohibited to prohibit the page operation as required. The page switching prohibition flag of ON (1) indicates prohibiting the page switching, and the page switching prohibition flag of OFF (0) indicates allowing the page switching. Further, the page switching prohibition flag can be stored in a given area in the RAM 503 or the HDD504 of FIG. 2.

FIG. 8 is a flowchart showing the steps of a process when the page switching is instructed. The flowchart can be executed by the execution unit 410. At first, the execution unit 410 determines whether the page switching instruction is detected (step S500). If the page switching instruction is detected (step S500: YES), the execution unit 410 checks the status of the page switching prohibition flag (step S510). If the page switching prohibition flag is ON that is the page switching is prohibited (step S510: YES), the execution unit 410 ignores the page switching instruction, and do not execute the page switching (step S520). If the page switching prohibition flag is OFF that is the page switching is allowed (step S510: NO), the execution unit 410 executes the page switching based on the page switching instruction (step S530).

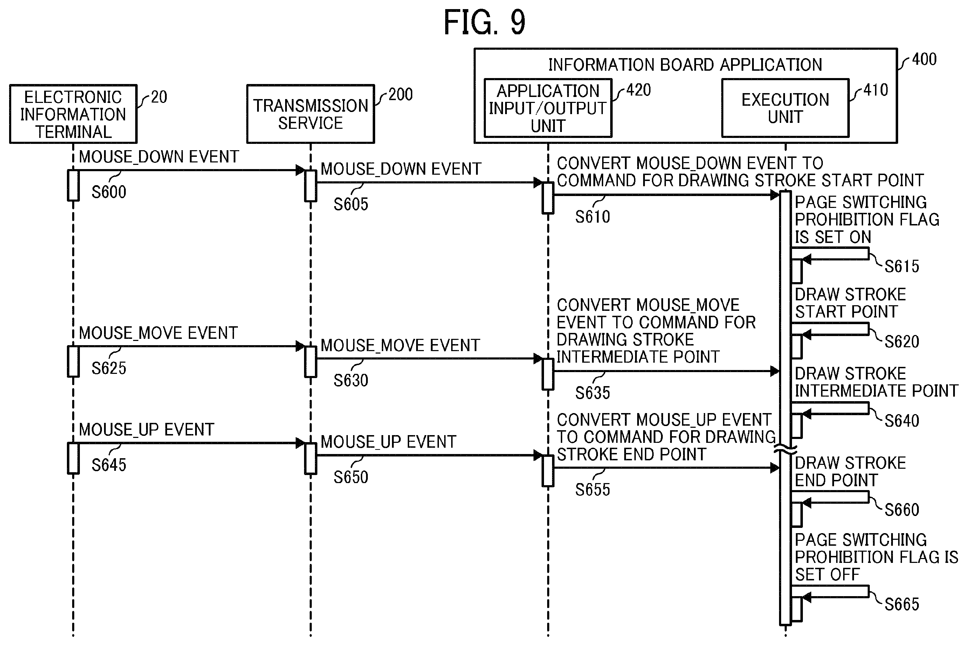

FIG. 9 is a sequential chart of a process including ON-OFF control of the page switching operation when a stroke is being drawn in the interactive electronic information board (IEIB) system. FIG. 9 illustrates a first case that the page switching is prohibited when the one continuously-writing stroke is being drawn. The one continuously-writing stroke can be generated from a plurality of operation events such as a plurality of mouse events, and the plurality of operation events is collectively used as one set of operation events. For example, the one continuously-writing stroke can be generated from one Mouse_Down event, one or more Mouse_Move events, and one Mouse_Up event. The Mouse_Down event occurs when an image drawing such as a line drawing by using the pointing device (e.g., electronic pen) is started, and the Mouse_Down is assigned with information of coordinates of a start point of a stroke. The one or more of the Mouse_Move events are assigned with information of coordinates of intermediate points of the stroke. The Mouse_Down event occurs when the image drawing such as a line drawing by using the pointing device (e.g., electronic pen) is ended, and the Mouse_Down event is assigned with information of coordinates of an end point of the stroke.

Referring back to FIG. 9, at first, the electronic information terminal 20 transmits the Mouse_Down event, which is one of the operation event information, to the first communication controller 240 of the transmission service 200 (step S600). The first communication controller 240 transmits the received the Mouse_Down event to the transmission service input/output unit 210, and the transmission service input/output unit 210 assigns the terminal ID (e.g., 1,2, ..., n) used for identifying the electronic information terminals 20, and then the transmission service input/output unit 210 transmits the Mouse_Down event assigned with the terminal ID to the application input/output unit 420 of the information board application 400 (step S605).

When the application input/output unit 420 receives the Mouse_Down event, the application input/output unit 420 converts the Mouse_Down event to a functional execution command having a format executable by the execution unit 410, and transmits the functional execution command to the execution unit 410 (step S610). The application input/output unit 420 processes the mouse event assigned with the terminal ID to generate the functional execution command for each of the terminal IDs. Since the Mouse_Down event is an operation event when a stroke drawing is started, the application input/output unit 420 generates a command for drawing a stroke start point as the functional execution command. After receiving the command for drawing the stroke start point, the execution unit 410 sets the page switching prohibition flag to "ON" (step S615). Then, the execution unit 410 executes the command for drawing the stroke start point transferred from the application input/output unit 420 (step S620), in which the start point of a stroke is drawn on the display 50 (FIG. 1).

After the Mouse_Down event, the electronic information terminal 20 transmits the Mouse_Move event to the first communication controller 240 of the transmission service 200 (step S625). The first communication controller 240 transmits the received Mouse_Move event to the transmission service input/output unit 210, and the transmission service input/output unit 210 assigns the terminal ID (e.g., 1, 2, ..., n) used for identifying the electronic information terminals 20, and the transmission service input/output unit 210 transmits the Mouse_Move event to the application input/output unit 420 of the information board application 400 (step S630). The application input/output unit 420 converts the received Mouse_Move event to a command for drawing stroke intermediate point, which is the functional execution command, having a format executable by the execution unit 410, and transmits the functional execution command to the execution unit 410 (step S635).

The execution unit 410 executes the command for drawing stroke intermediate point transferred from the application input/output unit 420 (step S640), in which the stroke intermediate point is drawn on the display 50 (see FIG. 1). Steps S625 to S640 are repeated each time the electronic information terminal 20 transmits the Mouse_Move event.

After the Mouse_Move event, the electronic information terminal 20 transmits the Mouse_Up event to the first communication controller 240 of the transmission service 200 (step S645). The first communication controller 240 transmits the received Mouse_Up event to the transmission service input/output unit 210, and the transmission service input/output unit 210 assigns the terminal ID (e.g., 1, 2, ..., n) used for identifying the electronic information terminals 20, and the transmission service input/output unit 210 transmits the Mouse_Up event to the application input/output unit 420 of the information board application 400 (step S650).

When the application input/output unit 420 receives the Mouse_Up event, the application input/output unit 420 converts the Mouse_Up event to a functional execution command having a format executable by the execution unit 410, and transmits the functional execution command to the execution unit 410 (step S655). The application input/output unit 420 processes the mouse event assigned with the terminal ID to generate the functional execution command for each of the terminal IDs. Since the Mouse_Up event is an operation event when the stroke drawing is ended, the application input/output unit 420 generates a command for drawing a stroke end point as the functional execution command. The execution unit 410 executes the command for drawing the stroke end point transferred from the application input/output unit 420 (step S660), in which the stroke end point is drawn on the display 50 (see FIG. 1). Then, the execution unit 410 sets the page switching prohibition flag to "OFF" (step S665).

With employing the above described processing, the page switching when the one continuously-writing stroke is being drawn can be prohibited, and a situation that the drawing-in-progress stroke is reproduced on a page not matched to the user's intension can be prevented. For example, a situation illustrated in FIG. 13A can be prevented.

### (Variant example of first case)

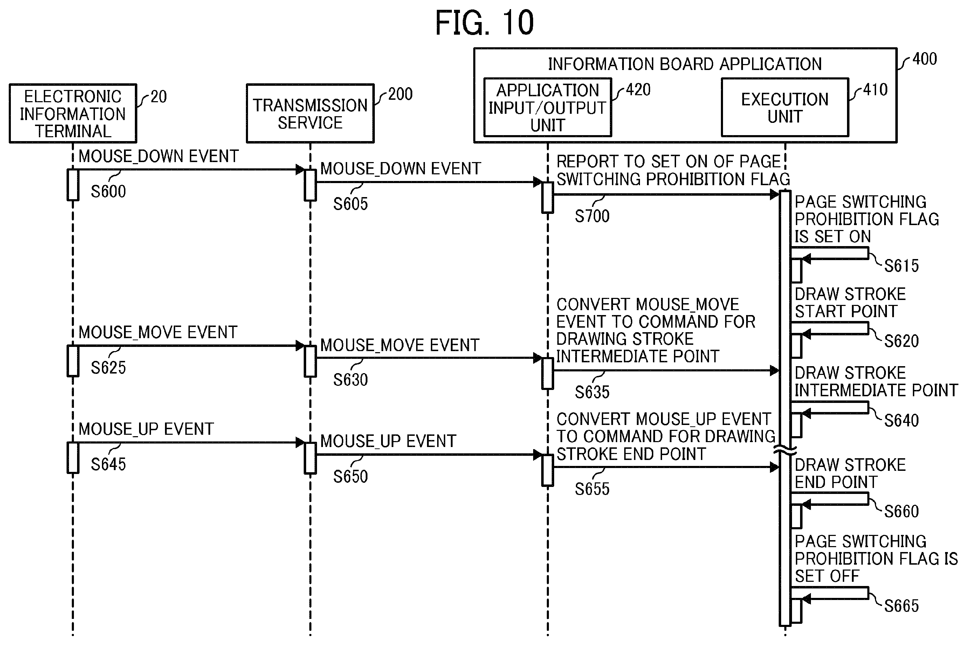

In a variant example of the first case, step S610 and step S615 is switched. FIG. 10 is another sequential chart of a process including ON-OFF control of the page switching operation when a stroke is being drawn in the interactive electronic information board (IEIB) system for the variant example. The same steps of FIGs. 9 and 10 are assigned with the same step numbers, and the description of the same steps are omitted. At first, steps S600 and S605 are performed. Then, when the application input/output unit 420 receives the Mouse_Down event related to the stroke drawing, the application input/output unit 420 instructs or reports the execution unit 410 to set the page switching prohibition flag with "ON" (step S700). When the execution unit 410 receives the instruction to set "ON" of the page switching prohibition flag, the execution unit 410 sets the page switching prohibition flag to "ON" (step S615).

The application input/output unit 420 converts the Mouse_Down event to the functional execution command having a format executable by the execution unit 410, and transmits the functional execution command to the execution unit 410 (step S610). The application input/output unit 420 processes the mouse event assigned with the terminal ID to generate the functional execution command for each of the terminal IDs. Since the Mouse_Down event is an operation event when a stroke drawing is started, the application input/output unit 420 generates a command for drawing a stroke start point as the functional execution command. After receiving the command for drawing the stroke start point, the execution unit 410 executes the command for drawing the stroke start point transferred from the application input/output unit 420 (step S620), in which the stroke start point is drawn on the display 50 (see FIG. 1). The subsequent steps are same as the steps of FIG. 9, and the description of the same steps are omitted. With employing the above described processing, the page switching when the one continuously-writing stroke is being drawn can be prohibited, and a situation that the drawing-in-progress stroke is reproduced on a page not matched to the user's intension can be prevented.

### (Second case)

A description is given of a second case of the ON-OFF control of the page switching operation when a when a stroke is being drawn based on the operation event transmitted from any one of the electronic information terminals 20. As to the second case, as indicated in FIG. 3B, the execution unit 410 includes a counter 410a to count the number of the command for drawing the stroke start point and the number of the command for drawing the stroke end point. Specifically, each time the command for drawing the stroke start point based on the Mouse_Down event is transmitted from any one of the electronic information terminals 20 and received by the interactive electronic information board (IEIB) 40, the counter 410a increments the number for "1". By contrast, each time the command for drawing the stroke end point based on the Mouse_Up event is transmitted from any one of the electronic information terminals 20 and received by the interactive electronic information board (IEIB) 40, the counter 410a decrements the number for "1." Specifically, when the counter 410a is set with a number other than 0 (e.g., 1, 2, 3...), the execution unit 410 is drawing at least one continuously-writing stroke based on the mouse event transmitted from any one of the electronic information terminals 20, in which the page switching prohibition flag is not set to "OFF." By contrast, when the counter 410a is set with zero (0), all of one continuously-writing stroke drawing is completed, in which the execution unit 410 sets the page switching prohibition flag to "OFF."

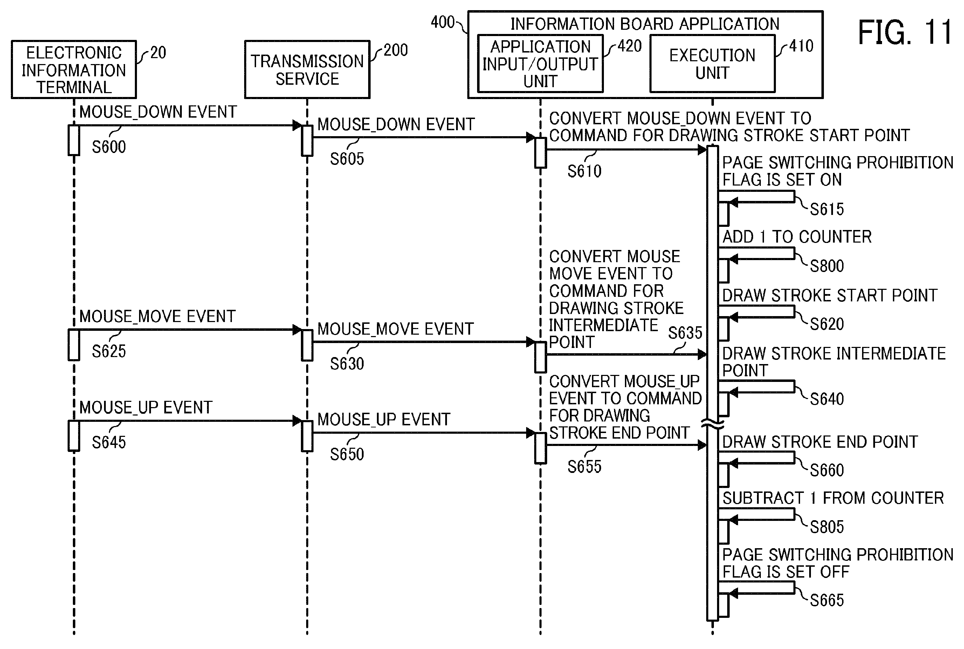

FIG. 11 is another sequential chart of a process including ON-OFF control of the page switching operation when the stroke is being drawn in the second case. The same steps of FIGs. 9 and 11 are assigned with the same step numbers, and the description of the same steps are omitted. At first, steps S600, S605 and S610 are performed. After receiving the command for drawing the stroke start point, the execution unit 410 sets the page switching prohibition flag to "ON" (step S615).

Then, the execution unit 410 increments the number of the counter 410a for "1" (step S800). Further, the execution unit 410 executes the command for drawing the stroke start point transferred from the application input/output unit 420 (step S620), in which the stroke start point is drawn on the display 50 (see FIG. 1), and then steps S625 to S655 are performed.

The execution unit 410 executes the command for drawing the stroke end point transferred from the application input/output unit 420 (step S660), in which the stroke end point is drawn on the display 50 (see FIG. 1). Then, the execution unit 410 decrements the number of the counter 410a for "1" (step S805). At last, the execution unit 410 checks the number set for the counter 410a. If the number of counter 410a is zero (0), the one continuously-writing stroke is not being drawn, and the execution unit 410 sets the page switching prohibition flag to "OFF" (step S665). With employing the above described processing, even if the operation events of stroke drawing are transmitted from a plurality of the terminals concurrently, a situation that the drawing-in-progress stroke is divided and drawn on a page not matched to the user's intension can be prevented.

### (Third case)

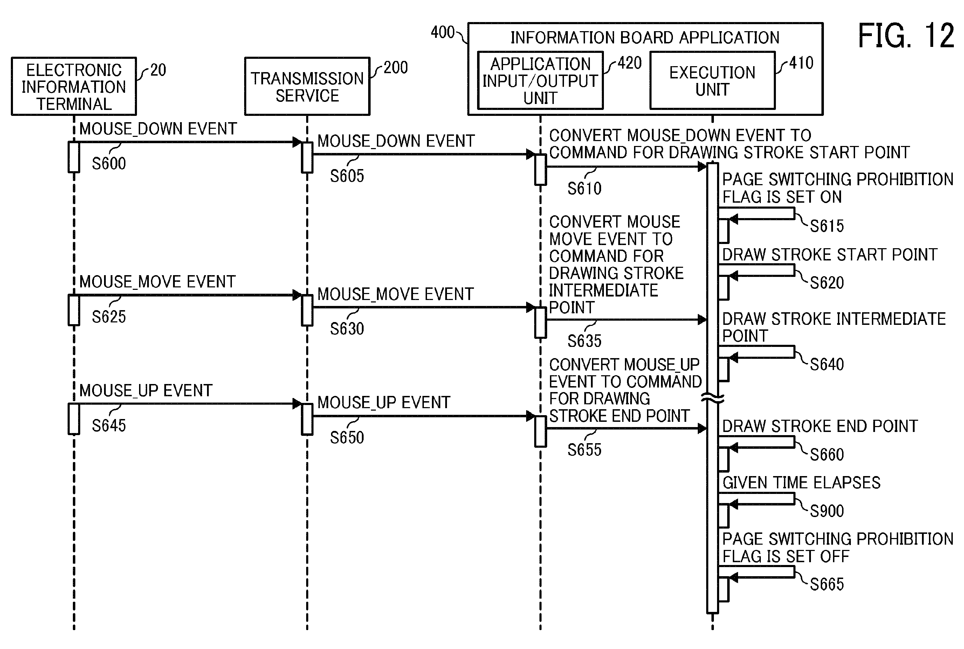

As to a third case, the page switching prohibition flag is set to "OFF" when a given time elapses after drawing the stroke end point corresponding to the Mouse_Up event, in which the execution unit 410 includes a timer 410c (see FIG. 3C) to measure the given time used for the ON-OFF control of the page switching prohibition flag. FIG. 12 is another sequential chart of process including ON-OFF control of the page switching operation when the stroke drawing is being in progress in the interactive electronic information board (IEIB) system in the third case. FIG. 12 illustrates the third case that the page switching is prohibited when one continuously-writing stroke is being drawn. The same steps of FIGs. 9 and 12 are assigned with the same step numbers, and the description of the same steps are omitted.

At first, steps S600 to S655 are performed. Then, the execution unit 410 executes the command for drawing the stroke end point transferred from the application input/output unit 420 (step S660), in which the stroke end point is drawn on the display 50 (see FIG. 1). Then, the execution unit 410 activates the timer 410c to measure time, and waits until the given time elapses (step S900). If the given time elapses without receiving a new command for drawing a stroke start point, the execution unit 410 sets the page switching prohibition flag to "OFF" (step S665). Further, if a new Mouse_Down event occurs before the given time elapses (i.e., when step S600, S605, S610 are performed before the given time elapses), the execution unit 410 executes step S620 without setting "OFF" to the page switching prohibition flag. After step S620, step S625 and subsequent steps are performed.

With employing the above described processing configuration, the page switching can be prohibited when the one continuously-writing strokes composed of a plurality of discrete operation data are being drawn, and a situation that the drawing-in-progress stroke is reproduced on a page not matched to the user's intension can be prevented. For example, a situation illustrated in FIG. 13B can be prevented. The given time set for step S900 can be pre-set as a fixed time to the interactive electronic information board (IEIB) 40 or the given time set for step S900 can be variably set by a user via the keyboard 511, the mouse 512 and the touch panel 519 illustrated in FIG. 2 or the electronic information terminal 20.

The above described example embodiment can devise the following configurations.

### (First configuration)

As to the first configuration, then image processing apparatus such as the interactive electronic information board (IEIB) 40 is connectable with a plurality of electronic information terminals 20 (20-1 to 20-n) via the communication network. The image processing apparatus includes circuitry or a processor including the acquiring unit 270, the frame output unit 430, the first communication controller 240 and the execution unit 410 to acquire one or more image data, to generate an image with a format based on the acquired one or more image data, to transmit the image generated by the image generator to the plurality the electronic information terminals 20 to display the generated image at the plurality of the electronic information terminals 20, to receive an operation event performed to the image displayed at each one of the electronic information terminals 20 from the each one of the electronic information terminals 20, and to execute a plurality of processes including a first process for processing the operation event performed at the each one of the electronic information terminals 20 and a second process. The circuitry or processor deactivates the second process while executing the first process. With employing this configuration, the first process can be executed without the effect of the second process, and thereby the desired process result can be attained.

### (Second configuration)

As to the second configuration, the first process is a stroke drawing based on the operation event such as the mouse event and the second process is a page switching, and the circuitry or processor including the execution unit 410 deactivates the page switching while executing the stroke drawing.

With employing this configuration, the page switching is prohibited when the stroke is being drawn, and thereby a situation that the drawing-in-progress stroke is reproduced on a page not matched to the user's intension can be prevented. As to the second configuration, a situation that the one continuously-writing stroke is reproduced on a page not matched to the user's intension can be prevented.

### (Third configuration)

As to the third configuration, the first process is a stroke drawing based on the operation event such as the mouse event and the second process is a page switching, and the circuitry or processor including the execution unit 410 deactivates the page switching until a given time elapses after executing the stroke drawing.

With employing this configuration, the page switching is prohibited until the given time elapses after drawing the stroke end point, and thereby a situation that the drawing-in-progress stroke is reproduced on a page not matched to the user's intension can be prevented. As to the third configuration, a situation that the one continuously-writing stroke composed of a plurality of discrete operation data is reproduced on a page not matched to the user's intension can be prevented.

### (Fourth configuration)

As to the fourth configuration, the circuitry or processor including the application input/output unit 420 further identifies the electronic information terminal 20 that has performed the operation event based on identification (ID) information assigned to the operation event. As to the fourth configuration, the application input/output unit 420 can determine which one of the electronic information terminals 20 transmits the operation event based on the identification (ID) information. With employing this configuration, the operation events transmitted from the plurality of the electronic information terminals 20 can be processed effectively.

### (Fifth configuration)

As to the fifth configuration, the circuitry or processor including the application input/output unit 420 further processes the operation event performed at each of the electronic information terminals 20 based on the identification (ID) information, in which the operation event can be processed for each of the electronic information terminals 20. With employing this configuration, the operation events transmitted from the plurality of the electronic information terminals 20 can be distinguished and processed effectively.

### (Sixth configuration)

As to the sixth configuration, the circuitry or processor including the transmission service input/output unit 210 further assigns the identification (ID) information to the operation event to identify which one of the electronic information terminals 20 has performed the operation event. With employing this configuration, the transmission service input/output unit 210 can assign the terminal ID to the operation event, and the operation events transmitted from the plurality of the electronic information terminals 20 can be processed effectively.

### (Seventh configuration)

As to the seventh configuration, the interactive electronic information board (IEIB) system includes the interactive electronic information board (IEIB) 40, and one or more of the electronic information terminals 20 connectable to the interactive electronic information board (IEIB) 40 via the wireless LAN. With employing this configuration, the interactive electronic information board (IEIB) 40 and one or more of the electronic information terminals 20 can be connected via the wireless LAN to configure the interactive electronic information board (IEIB) system. With employing this configuration, the processes performed at the interactive electronic information board (IEIB) 40 and the operation event processed at each one of the electronic information terminals 20 can be shared by the interactive electronic information board (IEIB) 40 and the electronic information terminals 20.

### (Eighth configuration)

As to the eighth configuration, the image processing system includes the interactive electronic information board (IEIB) 40 and one or more electronic information terminals 20 connectable with the interactive electronic information board (IEIB) 40 via a communication network. The electronic information terminal 20 includes the identification (ID) information assignment unit 370 to assign the terminal ID to the operation event. As to the eighth configuration, the interactive electronic information board (IEIB) 40 and one or more of the electronic information terminals 20 can be connected via the wireless LAN to configure the interactive electronic information board (IEIB) system, and the identification (ID) information assignment unit 370 of each one of the electronic information terminals 20 can assign the terminal ID to the operation event. With employing this configuration, the interactive electronic information board (IEIB) 40 can identify or recognize which one of the electronic information terminals 20 has performed the operation event, and can process the operation events performed at each one of the electronic information terminals 20 effectively.

### (Ninth configuration)

As to the ninth configuration, the method of processing image in the image processing system having the interactive electronic information board (IEIB) 40 connectable with a plurality of electronic information terminals 20 via the communication network such as wireless LAN is devised.

The method includes acquiring one or more image data, generating an image with a format based on the acquired one or more image data, transmitting the generated image to the plurality of the electronic information terminals 20 to display the generated image at the plurality of the electronic information terminals 20, receiving an operation event performed to the image displayed at each one of the electronic information terminals 20 from the each one of the electronic information terminals 20, and executing a plurality of processes including a first process for processing the operation event performed the each one of the electronic information terminals 20 and a second process. The second process is deactivated while executing the first process. With employing this configuration, the first process can be executed without the effect of the second process, and thereby the desired process result can be attained.

As to the above described image processing apparatus, the image processing system, and the image processing method, the operation event performed at the each one of the electronic information terminals and transmitted to the image processing apparatus can be processed effectively at the image processing apparatus. Specifically, the first process can be executed without the effect of the second process, and thereby the desired process result can be attained. For example, the first process for processing the operation event performed at the each one of the electronic information terminals such as stroke drawing can be executed correctly by deactivating the second process such as switching of pages of the information board image when the first process is being executed.

As described above, the present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on including a programmed processor. Further, the above described image processing method performable in the image processing apparatus can be described as a computer-executable program, and the computer-executable program can be stored in a ROM or the like in the image processing apparatus image and executed by the image processing apparatus. Further, the computer-executable program can be stored in a storage medium or a carrier such as compact disc-read only memory (CD-ROM), digital versatile disc-read only memory (DVD-ROM) or the like for distribution, or can be stored on a storage on a network and downloaded as required.

Numerous additional modifications and variations for the communication terminal, information processing system, and information processing method, a program to execute the information processing method by a computer, and a storage or carrier medium of the program are possible in light of the above teachings. It is therefore to be understood that within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claims.

## Claims

1. An image processing apparatus (40) connectable with a plurality of electronic information terminals (20) via a communication network, the image processing apparatus (40) comprising:
a processor (501, 515) to acquire one or more image data;
to generate an image with a format based on the acquired one or more image data;
to transmit the generated image to each one of the plurality of the electronic information terminals (20) to display the generated image at each one of the plurality of the electronic information terminals (20);
to receive an operation event performed to the image displayed at each one of the electronic information terminals (20) from each one of the electronic information terminals (20); and
to identify one of the electronic information terminals (20) that has performed the operation event based on identification (ID) information assigned to the operation event.

2. The image processing apparatus (40) of claim 1, wherein the processor (501, 515) executes a plurality of processes including at least a first process and a second process, the first process being a process of executing the operation event performed at each one of the electronic information terminals information terminals (20),
wherein the processor (501, 515) deactivates the second process while executing the first process.

3. The image processing apparatus (40) of claim 2, wherein the first process is a stroke drawing based on the operation event and the second process is a page switching, and the processor (501, 515) deactivates the page switching while executing the stroke drawing.

4. The image processing apparatus (40) of claim 2, wherein the first process is a stroke drawing based on the operation event and the second process is a page switching, and the processor (501, 515) deactivates the page switching until a given time elapses after executing the stroke drawing.

5. The image processing apparatus (40) of claim 1, wherein the processor (501, 515) processes the operation event performed at each of the electronic information terminals (20) based on the identification (ID) information.

6. The image processing apparatus (40) of claim 1, wherein the processor (501, 515) further assigns the identification (ID) information to the operation event.

7. An image processing system comprising:
the image processing apparatus of claim 1; and
one or more electronic information terminals connectable with the image processing apparatus via a communication network.

8. An image processing system comprising:
the image processing apparatus of claim 1; and
one or more electronic information terminals connectable with the image processing apparatus via a communication network, each of the electronic information terminals including the processor (501, 515) to assign identification (ID) information to the operation event.

9. A method of processing image in an image processing system having an image processing apparatus (40) connectable with a plurality of electronic information terminals (20) via a communication network, the method comprising:
acquiring one or more image data;
generating an image with a format based on the acquired one or more image data;
transmitting the generated image to each one of the plurality of the electronic information terminals (20) to display the generated image at each one of the plurality of the electronic information terminals (20);
receiving an operation event performed to the image displayed at each one of the electronic information terminals (20) from each one of the electronic information terminals (20); and
identifying one of the electronic information terminals (20) that has performed the operation event based on identification (ID) information assigned to the operation event.
